# EUROPÄISCHE PATENTSCHRIFT

(11) **EP 2 527 777 B1**
(45) Veröffentlichungstag und Bekanntmachung des Hinweises auf die Patenterteilung: **25.10.2017**
(21) Anmeldenummer: 12401064.6
(22) Anmeldetag: 17.04.2012
(51) Int. Cl.: F28D 20/00

(54) **Pufferspeicherbehälter**
Buffer storage tank
Réservoir tampon

(30) Priorität: 25.05.2011 DE 102011103146
(43) Veröffentlichungstag der Anmeldung: 28.11.2012
(73) Patentinhaber: KERMI System GmbH, 94447 Plattling (DE)
(72) Erfinder: Fonfara, Harald, 94551 Lalling (DE); Leibrecht, Florian, 94554 Moos (DE)
(74) Vertreter: Mischung, Ralf

(56) Entgegenhaltungen:
- EP-A1- 1 489 374
- EP-A2- 2 476 970
- WO-A1-2004/052524
- WO-A1-2004/052525
- DE-B3-102007 027 570
- DE-U1- 29 714 361
- JP-U- S5 471 742
- US-A- 4 850 426

## Beschreibung

Die vorliegende Erfindung betrifft einen Pufferspeicherbehälter mit Einströmdämpfer zur Führung eines in einen Behälter einzuströmenden Massenstromes nach dem Oberbegriff des Anspruchs 1.

Der Einsatz von Einströmdämpfern für Pufferspeicher ist aus dem Stand der Technik in unterschiedlicher Weise bekannt und ergibt sich aus dem Erfordernis, das Speichermedium möglichst ohne Verwirbelung des Behälterinhalts in den Behälter einzuspeisen. Das in den Behälter einströmende Medium (Lademassenstrom) wird häufig mit einem im Verhältnis zum Behälterinhalt relativ hohen Massenstrom bereitgestellt. Werden keine Einströmdämpfer zur Abbremsung dieses Lademassenstroms eingesetzt, so erfolgt nachteiligerweise eine Durchmischung des Behälterinhaltes, auch in vertikaler Richtung. Entsprechend werden Behälterbereiche mit höherer Fluid-Temperatur, die üblicherweise in höhergelegenen Behälterbereichen gebildet sind, vermischt mit solchen Bereichen niedrigerer Fluid-Temperatur auf tieferen Niveaus, mit der Folge hoher Exergieverluste.

Da der Vorteil von Pufferspeichern darin liegt, in einem Behälter unterschiedlich warme Fluidschichten unmittelbar angrenzend übereinander zu speichern, ist die Durchmischung solcher Schichten möglichst zu vermeiden, um insbesondere die obersten, wärmsten Schichten nicht unnötig abzukühlen.

Der Stand der Technik sieht daher unterschiedliche Einströmdämpfer vor, mit denen der dem Behälter zuzuführende Lademassenstrom möglichst ohne vertikale Vermischungseffekte in den Behälter eingebracht werden kann.

So ist aus der EP 2 003 414 A2 ein Beladesystem für einen thermischen Energiespeicher bekannt, bei welchem der Lademassenstrom durch mehrere radiale Diffusoren in den Behälter eingebracht wird. Ein in den Diffusor eingesetzter Strömungswiderstand soll dabei dafür sorgen, dass der Volumenstrom nicht in ungleichförmigen Strömungen, sondern gleichmäßig am äußeren radialen Rand bzw. Ringspalt des Diffusors aus diesem austritt. Das System ist allerdings sehr aufwendig in der Fertigung und auch die Installation innerhalb des Behälters ist umständlich.

Die EP 0 518 369 A1 schlägt alternativ eine Steigleitung innerhalb des Speicherbehälters vor. Ein Zuführrohr mündet etwas oberhalb der vertikalen Mitte innerhalb dieses Steigrohrs. Bei hohen Volumenströmen erzeugen diese nachteiligerweise eine Saugwirkung bei den Steigrohröffnungen in unmittelbarer Nähe der Mündung des Zuführrohres, wodurch eine unerwünschte Durchmischung der unterschiedlichen Schichten im Behälter auftritt.

Aus der DE 297 14 361 U1 ist ein Schichtenspeicher bekannt, bei der zentrisch zur Behälterachse eine Verteilerzone angeordnet ist, aus deren horizontal angeordneten Öffnungen Medium seitlich in den Behälter eintreten kann.

Aus der EP 1 489 374 A1, der DE 10 2007 027 570 B3 und der EP 2 476 970 A2 sind jeweils Speicherbehälter bekannt, in denen eine Flüssigkeit, geschichtet in unterschiedlichen Temperaturniveaus, gespeichert werden soll.

Die JP S54 71742 U zeigt einen Behälter mit innenseitig am oberen Rand angeordnetem Strömungsteil, mittels welchem ein Medium durch unterschiedlich positionierte Öffnungen nach unten, in horizontaler Richtung oder auch über einen Überlauf hinweg in den Behälter eintreten kann.

Andere Systeme basieren auf einer oder mehreren Trennwänden zwischen den einzelnen Schichten des Behälters, so dass eine Durchmischung über diese Trennwände hinweg nicht möglich ist. Allerdings wird die zwischen zwei Trennwänden liegende Schicht meist vollständig durchwirbelt, was wieder mit Exergieverlusten einhergeht. Darüber hinaus bestehen im Bereich der Trennbleche mitunter erhebliche Temperaturunterschiede, die sich durch die Trennschicht hindurch ausgleichen und auch dadurch die Funktion des Wärmespeichers beeinträchtigen.

Im Hinblick auf den hohen konstruktiven Aufwand und die trotzdem unzureichende Funktion der bekannten Einströmhilfen ist Aufgabe der vorliegenden Erfindung die Schaffung eines Einströmdämpfers, der mit geringem konstruktiven Aufwand ein besonders schonendes und verwirbelungsarmes Einspeisen des Lademassenstroms in den Pufferspeicherbehältern ermöglicht.

Die Aufgabe wird gelöst durch einen Pufferspeicherbehälter nach Anspruch 1. Weitere vorteilhafte Ausführungsformen ergeben sich aus den Unteransprüchen.

Der erfindungsgemäße Pufferspeicherbehälter umfasst am Einströmdämpfer eine Verteilerzone, in welche das dem Behälter zuzuführende Medium zunächst einströmen kann. Die Verteilerzone ist dabei mit mehreren separaten Öffnungen versehen, durch welche das Medium dann aus der Verteilerzone heraus in den Bereich des Pufferspeicherbehälters einströmen kann, in dem die unterschiedlichen Schichten ausgebildet sind oder werden sollen. Erfindungsgemäß ist die Lage und/oder die Größe und/oder die Gestalt der Öffnungen dabei so gewählt, dass sich der der Verteilerzone zugeführte Lademassenstrom auf alle Öffnungen aufteilt und dann durch jede Öffnung mit im Wesentlichen gleicher Strömungsgeschwindigkeit in das Behälterinnere einströmt.

Gegenüber dem Stand der Technik gewährleisten die erfindungsgemäßen Öffnungen das Einströmen des Lademassenstroms aus der Verteilerzone in den Behälter an mehreren voneinander getrennten Punkten. Die an allen Öffnungen im Wesentlichen gleiche Strömungsgeschwindigkeit stellt dabei sicher, dass der Lademassenstrom mit der geringst möglichen Strömungsgeschwindigkeit ausströmt, so dass die aus dem Stand der Technik bekannten störenden Verwirbelungen minimiert werden.

Erfindungsgemäß wird das Volumen der Verteilerzone von einem Abschnitt der Behälterwand begrenzt bzw. umschlossen, so dass in diesem Bereich ein separates zusätzliches Bauteil nicht erforderlich ist. Dadurch ergibt sich eine konstruktive Vereinfachung gegenüber solchen Einströmdämpfern, deren Verteilerzone von der Behälterinnenwand beabstandet im Inneren des Behälters angeordnet ist. Daher lässt sich der erfindungsgemäße Einströmdämpfer leichter fertigen und montieren.

Eine besonders vorteilhafte Ausführungsform sieht darüber hinaus vor, dass alle Öffnungen so am Einströmdämpfer angeordnet sind, dass sie sich nach der Montage alle auf im Wesentlichen gleicher vertikaler Höhe des Pufferspeicherbehälters befinden. Somit ist es nicht nötig, einen den Behälter im Wesentlichen über seine gesamte Höhe durchragenden Einströmdämpfer vorzusehen, der konstruktiv entsprechend aufwendig ist. Stattdessen liegen die Öffnungen auf gleicher Höhe. Aufgrund der Aufteilung des Lademassenstroms auf alle Öffnungen zur optimal reduzierten bzw. angeglichenen Einströmgeschwindigkeit pro Öffnung kann das Fluid besonders schonend in den Behältern eingebracht werden und im Behälterinneren, nachdem es den Einströmdämpfer verlassen hat, der seiner aktuellen Temperatur entsprechenden Schicht zuströmen.

Eine besonders zweckmäßige Ausführungsform der Erfindung sieht vor, dass die Verteilerzone innerhalb des Behälters angeordnet ist und durch ein von den Öffnungen durchsetztes Trennelement vom restlichen Behälterinneren abgetrennt ist. Die Verteilerzone wird also im Inneren des Behälters vorgesehen und beispielsweise über eine durch die Behälterwand in die Verteilerzone hineinführende Rohrleitung mit dem Lademassenstrom versorgt. Die Verteilerzone ist durch geeignete Abgrenzungselemente vom restlichen Behälterinneren separiert. Eines solcher Abgrenzungselemente dient dabei als Trennelement, welches mit den erfindungsgemäßen Öffnungen durchsetzt ist. Vorzugsweise, aber nicht zwingend notwendig bilden die Öffnungen die einzige strömungstechnische Verbindung zwischen der Verteilerzone und dem restlichen Behälterinneren.

Bei einer alternativen Ausführungsform des Einstromdämpfers kann dieser mit seiner Verteilerzone außerhalb des Pufferspeicherbehälters angeordnet werden, er grenzt jedoch dabei so an den Behälter an, dass ein Abschnitt der Behälterwand zugleich als das von den Öffnungen durchsetzte Trennelement dient. In diesem Fall strömt der Lademassenstrom zunächst in die außerhalb des Behälters ausgebildete Verteilerzone, verteilt sich innerhalb dieser auf die in der Behälteraußenwand vorgesehenen Öffnungen und strömt dann mit jeweils gleicher Geschwindigkeit durch die als Trennelement dienende Behälterwand in das Behälterinnere. Bei dieser Ausführungsform ist der Einströmdämpfer mit seiner Verteilerzone einfacher - weil außerhalb des Behälters - zu montieren. Allerdings muss die Behälterwand von den Öffnungen in der gewählten Anzahl durchsetzt sein.

Bei der innerhalb des Behälters angeordneten Verteilerzone genügt dagegen eine Einspeiseöffnung in der Behälterwand, um das Medium in die dahinterliegende Verteilerzone einspeisen zu können. Allerdings muss hier der Einströmdämpfer mit seiner Verteilerzone innerhalb des Behälters angeordnet werden.

Die Verteilung des Lademassenstromes in der Verteilerzone erfolgt mit dem Ziel, die Ausströmgeschwindigkeiten an den einzelnen Öffnungen möglichst aneinander anzugleichen. Dies bedeutet jedoch nicht zwingend, dass jeder Öffnung auch der gleiche Massenstrom zugeführt wird. Unter anderem die Öffnungsgestalt und -abmessung sowie die Lage relativ zu anderen Öffnungen oder zur Einspeisestelle des Lademassenstroms in die Verteilerzone oder auch der Anströmwinkel nehmen Einfluss auf die resultierende Ausströmgeschwindigkeit an der jeweiligen Öffnung und können erfindungsgemäß eingestellt bzw. angepasst werden.

Gegenüber dem Stand der Technik ergibt sich eine besonders zweckmäßige Ausführungsform des Einströmdämpfers dann, wenn wenigstens eine Begrenzungsfläche der Verteilerzone an die Kontur des Behälters angepasst ist und daran angrenzt, da sich der Dämpfer dann besonders raumsparend anordnen lässt. Bei einem im Behälter liegenden Einströmdämpfer kann es einerseits ein bspw. gekrümmter Abschnitt der Behälterinnenwand sein, an den sich die Verteilerzone anpasst. Diese wird dann quasi rückwärtig mit einer gekrümmten Wandung begrenzt. Die resultierende Materialeinsparung reduziert den konstruktiven Aufwand für den Einströmdämpfer.

Während im vorgenannten Fall die Behälterwand die Verteilerzone zumindest teilweise in horizontaler Richtung begrenzt (bei vertikal stehendem zylinderförmigem Behälter) kann die Verteilerzone darüber hinaus durch zwei parallel zueinander beabstandete, horizontal anzuordnende Bleche bzw. Abdeckplatten in vertikaler Richtung begrenzt sein. Auch diese horizontalen Abdeckplatten folgen mit ihren der Behälterachse nach außen abgewandten Rändern zweckmäßigerweise der Kontur der Behälterinnenwand, um mit dieser dicht abzuschließen.

Die zwischen diesen Abdeckplatten vertikal und von der Behälterinnenwand auf einer Seite auch horizontal abgedichtete Verteilerzone verfügt über ein von den erfindungsgemäßen Öffnungen durchsetztes Trennelement, welches die beiden Abdeckplatten an ihren der Behälterachse zugewandten Rändern miteinander verbindet und zugleich die Verteilerzone auf der der Behälterachse zugewandten Seite begrenzt. Durch zwei weitere Abdeckungen, die die Verteilerzone in Umfangsrichtung der Behälterinnenwand folgend zwischen der oberen und der unteren Abdeckplatte verschließen, entsteht eine vom Behälterinneren vollständig abgekapselte Verteilerzone, wobei hier der Lademassenstrom über eine in der Behälterwand vorgesehene Öffnung von außen zugeführt werden kann und dieser durch die Verteilerzone hindurch aus den Öffnungen im Trennelement in das Behälterinnere einströmen kann.

Eine besonders vorteilhafte Variante des Einströmdämpfers verzichtet auf die zusätzlichen Begrenzungselemente in Umfangsrichtung der Behälterinnenwand. Stattdessen wird die Verteilerzone in vertikaler Richtung begrenzt durch zwei parallel übereinander angeordnete, spitz zulaufende sichelförmige Abdeckplatten. Ein von den erfindungsgemäßen Öffnungen durchsetztes Trennelement verbindet die beiden Abdeckplatten entlang ihrer inneren Sichelkontur miteinander und trifft an den beiden Spitzen der Sichelform auf die Behälterinnenwand, welche die Verteilerzone entlang der äußeren Sichelkontur der beiden Abdeckplatten begrenzt bzw. abdichtet.

Im Querschnitt weist ein solcher Einströmdämpfer ein auf der Seite liegendes U-förmiges Profil auf, bei dem die beiden (übereinander) gegenüberliegenden, parallelen Schenkel die Verteilerzone in vorzugsweise vertikaler Richtung begrenzen, während der beide Schenkel verbindende Abschnitt das von den Öffnungen durchsetzte Trennelement darstellt. Die Behälterwand deckt die Verteilerzone dabei rückwärtig ab, und verschließt das U-Profil dabei an der offenen Seite, wenngleich es genau genommen nicht zum Querschnitt des Dämpfers selbst gehört.

Diese Konstruktion ist nicht nur besonders einfach herzustellen, sondern schmiegt sich in horizontaler Richtung auch ohne hervorstehende Sprünge oder Absätze an die innere Kontur des zylinderförmigen Speicherbehälters an. Unter Zuhilfenahme der Behälterinnenwand genügen dabei also drei weitere Begrenzungsflächen (obere Abdeckplatte, untere Abdeckplatte, Trennelement mit den erfindungsgemäßen Öffnungen), um eine abgeschlossene Verteilerzone auszubilden und zugleich optimale Einströmverhältnisse von der Verteilerzone in das Behälterinnere zu ermöglichen.

Als besonders wirkungsvoll hat sich die erfindungsgemäße Ausführungsform der Erfindung herausgestellt, bei der in der Verteilerzone Leitbleche vorgesehen sind, um die Strömung gezielt zu einzelnen Öffnungen hinzulenken. Vorzugsweise ist dabei jeder Öffnung wenigstens ein eigenes Leitblech zugeordnet. Ein Leitblech kann unmittelbar angrenzend an eine Öffnung angeordnet sein. Grundsätzlich können die Leitbleche jedoch auch beliebig innerhalb der Verteilerzone angeordnet werden, um den gewünschten Effekt der gleichmäßigen Ausströmgeschwindigkeit aus allen Öffnungen zu erzielen. Eine Variante der Erfindung sieht dabei vor, dass jeder Öffnung mindestens ein Leitblech zugeordnet ist, welches unmittelbar an die Öffnung angrenzt. Die Öffnung kann dabei rechteckige Form haben. Insbesondere kann die Öffnung gebildet werden durch Herausklappen bzw. Umbiegen eines in der Ebene des Trennelements teilweise freigeschnittenen Abschnitts, der im umgebogenen Zustand das Leitblech darstellt und dabei zugleich die Öffnung freigibt bzw. ausbildet. Das Leitblech wird dabei also nach Art eines Fensters aus dem Trennelement herausgeklappt. Durch die Angrenzung des Leitblechs unmittelbar an die Öffnung lässt sich die Strömung sehr gut und gezielt in Richtung auf die zugehörige Öffnung lenken.

Von Bedeutung für die erfindungsgemäße Wirkung des Einströmdämpfers ist auch der Anstellwinkel der einzelnen Leitbleche. Darunter sei der Winkel zu verstehen, der zwischen dem (vorzugsweise ebenen) Leitblech und einer gedachten Achse gebildet wird, welche eine dem Leitblech zugeordnete Öffnung lotrecht durchragt. Da die Öffnungen unterschiedlich groß ausgebildet werden können und auch Ihre Lage unterschiedlich beabstandet zur (vorzugsweise einzigen) Einspeisestelle in die Verteilerzone gewählt wird, kann der Anstellwinkel der einzelnen Leitbleche je nach Lage und Größe der zugehörigen Öffnung variieren, um insgesamt die angestrebte gleichmäßige Austrittsgeschwindigkeit für jede Öffnung zu erzielen. Auch gekrümmte Leitbleche sind denkbar.

Obwohl der Einströmdämpfer bevorzugt eine zentrisch angeordnete Zufuhröffnung aufweist, kann diese Öffnung auch an einer anderen, evtl. konstruktiv eher geeigneten oder besser zugänglichen Stelle des Einströmdämpfers sitzen, welche nicht in einer den Dämpfer teilenden Symmetrieebene liegt. Bei zentrischer Einbindung verteilt sich das zugeführte Medium eher symmetrisch, natürlich in Abhängigkeit von weiteren Einbauten, wie etwa Leitblechen. Bei asymmetrischer Einbindung dagegen kann besonders erforderlich sein, die Medienverteilung innerhalb des Einströmdämpfers durch entsprechend angepasste, im Dämpfer ebenfalls nicht symmetrisch ausgerichtete Konstruktionselemente (wie bspw. Leitbleche) so zu beeinflussen bzw. zu lenken, dass trotz asymmetrischer Einströmung das Medium an allen Ausströmöffnungen mit im Wesentlichen gleicher Geschwindigkeit austritt.

Denkbar ist infolge dessen auch ein Einströmdämpfer mit zwei oder mehr asymmetrisch oder symmetrisch zum Dämpfer angeordneten Zufuhröffnungen, deren Zuflüsse innerhalb des Dämpfers dem angestrebten Ziel entsprechend gelenkt und beeinflusst werden. Eine dieser Öffnungen kann dabei statt als Zufuhr- aber auch als Abströmöffnung dienen für das Medium, wenn es wenigstens teilweise gar nicht in den eigentlichen Behälter einströmen soll, sondern stattdessen bzw. in einen Heizkreislauf. Dann strömt ein Teil des Mediums durch eine Zufuhröffnung zunächst in die Verteilerzone des Dämpfers ein und von dort durch eine Abströmöffnung wieder heraus, ohne durch die aus der Verteilerzone in den Behälter führenden Öffnungen zu strömen.

Der Vorteil dieser Variante liegt einerseits darin, dass das bspw. von einer Wärmepumpe kommende Medium quasi ohne Temperaturverlust in den Heizkreislauf einströmen kann, da es Vermischungen mit anderen Temperaturschichten innerhalb der Verteilerzone nicht gibt. Andererseits erfolgt durch die Führung des Mediums "durch" die Verteilerzone eine hydraulische Entkopplung der beiden Systeme Wärmepumpe bzw. Heizkreislauf, so dass druckrelevante Einflüsse nicht ungewollt von einem System auf das andere übertragen werden.

Die Erfindung ist gerichtet auf einen Pufferspeicher, der mit wenigstens einem Einströmdämpfer der vorbeschriebenen Art ausgerüstet ist. Denkbar sind natürlich auch Pufferspeicher mit mehreren Einströmdämpfern, die auf unterschiedlichen Höhenniveaus angeordnet werden können. Auch Pufferspeicher sind erfasst, die mit mehreren unterschiedlichen Ausführungsvarianten des vorbeschriebenen Einströmdämpfers ausgerüstet sind.

Eine spezielle Ausführungsform des erfindungsgemäßen Einströmdämpfers wird nachfolgend anhand von Figurenbeispielen näher erläutert. Dabei zeigen
- Fig. 1: einen Einströmdämpfer in schematischer Darstellung,
- Fig. 2: eine Draufsicht auf den Einströmdämpfer nach Fig. 1 bei abgenommener oberer Abdeckplatte,
- Fig. 3: einen aufgeschnittenen Pufferspeicherbehälter und
- Fig. 4: eine perspektivische schematische Darstellung des Behälters nach Fig. 3.

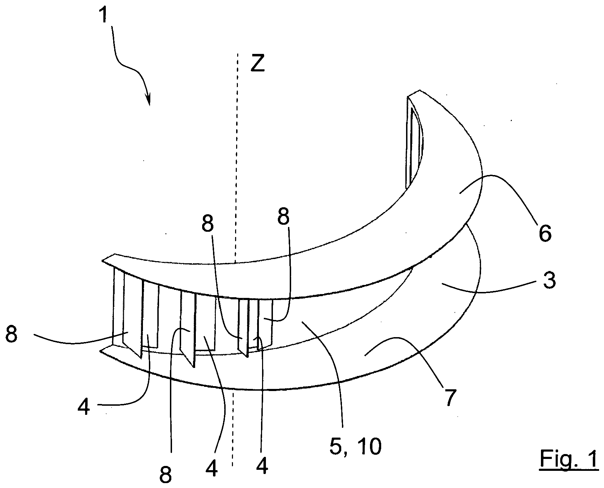

Der in Fig. 1 dargestellte Einströmdämpfer umfasst zwei sichelförmige, parallel übereinander liegende Abdeckplatten 6 und 7. An ihrem zur zentrischen Behälterachse Z zugewandten Rand sind die beiden Platten 6 und 7 über ein vertikales Trennblech 5 miteinander verbunden. Das Trennblech ist durchsetzt mit rechteckigen Öffnungen 4, an die jeweils eines oder mehrere Leitbleche 8 angrenzen.

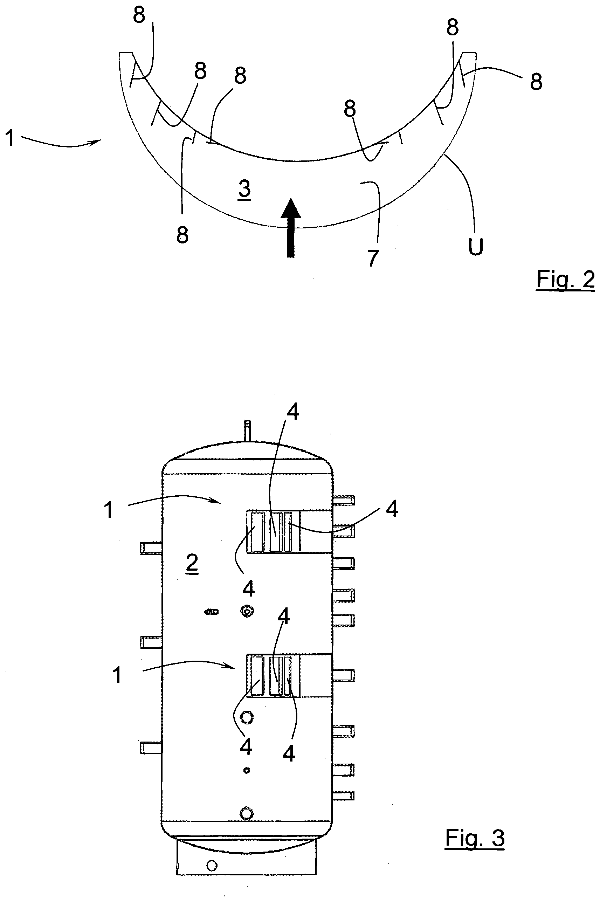

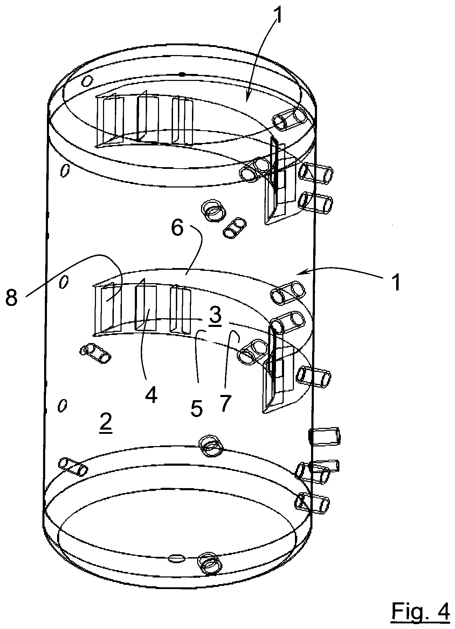

Auf der von der Achse Z abgewandten Seite ist die Konstruktion aus den Abdeckplatten 6 und 7 mit dem verbindenden Trennelement 5 zunächst nicht abgedeckt oder verschlossen. Die Platten 6 und 7 sind jedoch mit ihren der Achse Z abgewandten Rändern an den Innendurchmesser eines zylindrischen Pufferspeicherbehälters 2 (siehe Figur 3 und 4) angepasst. Durch Einsetzen des Einströmdämpfers an die Innenwandung eines solchen Behälters wird die Verteilerzone 3 im Wesentlichen abgedichtet. Lediglich die einzelnen Öffnungen 4 sowie an den Spitzen der Sichelkonstruktion gegebenenfalls offen gelassene Durchgänge gestatten den Übertritt eines Speichermediums aus der Verteilerzone 3 in das Behälterinnere.

Obwohl der Einstromdämpfer gemäß Fig. 1 für den Einsatz auf der Innenwand eines zylindrischen Pufferspeicherbehälters vorgesehen ist, eignet sich sein Konstruktionsprinzip auch für den Einsatz auf der Außenseite eines solchen Behälters. In diesem Fall würde das Trennelement 5 ersetzt durch einen Teil der Behälterwand 10 und die Platten 6 und 7 müssten an ihrem der Behälterachse Z abgewandten Rand über ein entsprechend gebogenes Verbindungsblech dicht miteinander verbunden werden. Die Öffnungen 4 wären dann unmittelbar in die Behälterwand 10 einzubringen, während der Einstromdämpfer im Bereich der Sichelspitzen vollständig geschlossen sein müsste.

Zweckmäßigerweise erhält der Einstromdämpfer das aufzuteilende Medium durch eine Zufuhröffnung, die in der dem Trennblech 5 bzw. der Behälterwand 10 gegenüberliegenden Abdeckung auf der äußeren Sichelseite vorzusehen ist.

Fig. 2 zeigt eine schematische Draufsicht auf den Einströmdämpfer gemäß Fig. 1 bei abgenommener oberer Abdeckplatte 6. Zu erkennen sind insbesondere die Leitbleche 8, von denen wenigstens eines an den in Fig. 2 nicht zu erkennenden Öffnungen angeordnet ist. Am äußeren Umfang U liegt der Einströmdämpfer bzw. die untere Platte 7 (und auch die obere Platte 6) an der Innenseite des nicht näher dargestellten Behälters an. Durch eine zentrische Einlassöffnung im Bereich des dargestellten Pfeiles gelangt Speichermedium in den horizontal angeordneten Einströmdämpfer und verteilt sich auf die einzelnen Öffnungen, um von dort in das um die Behälterachse Z ausgebildete Behälterinnere einzuströmen. Die einzelnen Leitbleche 8 können dabei nach Anzahl und Anstellwinkel unterschiedlich positioniert sein, um ein Ausströmen an allen Öffnungen mit weitgehend identischer Strömungsgeschwindigkeit zu erreichen.

In Fig. 3 ist ein aufgeschnittener Pufferspeicherbehälter 2 dargestellt, der mit zwei ebenfalls geschnitten dargestellten Einströmöffnern 1 ausgerichtet ist. Durch die beiden mit Pfeilen angedeuteten Öffnungen kann das Speichermedium von außen durch die Behälterwand in die Verteilerzone eines jeden Einströmdämpfers und von dort durch die einzelnen Öffnungen 4 ins Behälterinnere weitergeleitet werden.

Fig. 4 zeigt eine schematische perspektivische Ansicht durch den geschlossenen Behälter gemäß Fig. 3. Zu erkennen ist, wie sich die Platten 6 und 7 oberhalb bzw. unterhalb der jeweiligen Verteilerzone 3 mit ihren Außenkanten an die Behälterinnenwand anschmiegen, während das die beiden Platten 6 und 7 entlang ihrer Innenkante miteinander verbindende Trennelement 5 von einzelnen Öffnungen 4 durchsetzt ist, an die jeweils wenigstens ein in die Verteilerzonen hineinragendes Leitblech 8 angrenzt (aus Gründen der Übersichtlichkeit sind nicht alle Komponenten in den Fig. vollständig bezeichnet).

## Patentansprüche

1. Pufferspeicherbehälter mit einem Einströmdämpfer (1) zur Führung eines in den Pufferspeicherbehälter (2) einzuströmenden Massenstromes,
a) wobei der Einströmdämpfer eine Verteilerzone (3) umfasst, in die Medium einströmen kann
b) wobei der Einströmdämpfer mit mehreren separaten Öffnungen (4) versehen ist, um Medium aus der Verteilerzone (3) heraus in den Behälter (2) einströmen zu lassen,
c) wobei
die Verteilerzone (3) zumindest teilweise von einem Abschnitt (10) der Behälterwand begrenzt wird,
**dadurch gekennzeichnet**,
d) dass die Lage und/oder Größe und/oder die Gestalt der Öffnungen (4) so gewählt ist, dass sich der der Verteilerzone (3) zugeführte Lademassenstrom auf alle Öffnungen (4) aufteilt und durch jede Öffnung (4) mit im Wesentlichen gleicher Strömungsgeschwindigkeit in den Pufferspeicherbehälter (2) einströmt, und
e) dass in der Verteilerzone (3) Leitbleche (8) vorgesehen sind, um die Strömung gezielt zu einzelnen Öffnungen (4) hinzulenken.

2. Pufferspeicherbehälter nach Anspruch 1, **dadurch gekennzeichnet, dass** sich alle Öffnungen (4) auf gleicher vertikaler Höhe befinden.

3. Pufferspeicherbehälter nach einem der vorigen Ansprüche, **dadurch gekennzeichnet, dass** die Verteilerzone (3) innerhalb des Behälters angeordnet und durch ein von den Öffnungen (4) durchsetztes Trennelement (5) vom Behälterinneren abgetrennt ist.

4. Pufferspeicherbehälter nach einem der Ansprüche 1 bis 2, **dadurch gekennzeichnet, dass** die Verteilerzone (3) durch eine von den Öffnungen (4) durchsetzte Behälteraußenwand (10) als Trennelement (5) vom Behälterinneren abgetrennt ist.

5. Pufferspeicherbehälter nach einem der vorigen Ansprüche, **dadurch gekennzeichnet, dass** wenigstens eine Begrenzungsfläche (6, 7) der Verteilerzone an die Kontur des Behälters (2) angepasst ist.

6. Pufferspeicherbehälter nach einem der vorigen Ansprüche, **dadurch gekennzeichnet, dass** der Dämpfer in einem Querschnitt ein U-förmiges Profil aufweist, bei dem die beiden gegenüberliegenden, parallelen Schenkel (6, 7) die Verteilerzone (3) in vorzugsweise vertikaler Richtung begrenzen, während der beide Schenkel verbindende Abschnitt ein von den Öffnungen (4) durchsetztes Trennelement (5, 10) darstellt.

7. Pufferspeicherbehälter nach einem der vorigen Ansprüche, **dadurch gekennzeichnet, dass** die Verteilerzone (3) durch zwei parallel zueinander beabstandete, sichelförmige obere bzw. untere Abdeckplatten (6, 7) begrenzt ist, während ein von den Öffnungen durchsetztes Trennelement (5, 10) die beiden Abdeckplatten entlang ihrer inneren Sichelkontur miteinander verbindet.

8. Pufferspeicherbehälter nach einem der vorigen Ansprüche, **dadurch gekennzeichnet, dass** die Verteilerzone (3) nur eine Medien-Zufuhröffnung aufweist.

9. Pufferspeicherbehälter nach dem vorhergehenden Anspruch, **dadurch gekennzeichnet, dass** ein einer Öffnung (4) zugeordnetes Leitblech (8) zur Beeinflussung der Ausströmgeschwindigkeit unter einem vorgegebenen Anstellwinkel zu einer die zugehörige Öffnung (4) lotrecht durchragenden Öffnungsachse ausgerichtet ist.

10. Pufferspeicherbehälter nach einem der beiden vorhergehenden Ansprüche, **dadurch gekennzeichnet, dass** wenigstens eine Öffnung (4) rechteckig ist und wenigstens ein dieser Öffnung (4) zugehöriges Leitblech (8) an eine Seite des rechteckigen Randes der Öffnung (4) angrenzt.

11. Pufferspeicherbehälter nach dem vorhergehenden Anspruch, **dadurch gekennzeichnet, dass** die Öffnung (4) durch Ausschneiden des Leitblechs (8) entlang dreier ihrer Längskanten und Verschwenken um die der Öffnung (4) und dem Leitblech (8) gemeinsam verbleibende vierte Kante gebildet ist.

## Claims

1. A buffer storage tank having an inflow damper (1) for guiding a mass flow flowing into the buffer storage tank (2),
a) wherein the inflow damper comprises a distributor zone (3) into which medium can flow,
b) wherein the inflow damper is provided with a plurality of separate openings (4) in order to allow medium to flow out of the distributor zone (3) into the tank (2),
c) wherein the distributor zone (3) is delimited at least in part by a section (10) of the tank wall,
**characterised in that**
d) the position and/or size and/or the shape of the openings (4) are/is selected so that the load-mass flow supplied to the distributor zone (3) is divided between all the openings (4) and flows through each opening (4) into the buffer storage tank (2) with substantially the same flow velocity, and
e) baffle plates (8) are provided in the distributor zone (3) in order to direct the flow to individual openings (4) in a targeted manner.

2. A buffer storage tank according to claim 1, **characterised in that** all the openings (4) are located at the same vertical height.

3. A buffer storage tank according to one of the previous claims, **characterised in that** the distributor zone (3) is arranged within the tank and is separated from the interior of the tank by a separating element (5) through which the openings (4) pass.

4. A buffer storage tank according to one of claims 1 to 2, **characterised in that** the distributor zone (3) is separated from the interior of the tank by an outer tank wall (10), as the separating element (5), through which the openings (4) pass.

5. A buffer storage tank according to one of the previous claims, **characterised in that** at least one boundary surface (6, 7) of the distributor zone is adapted to the contour of the tank (2).

6. A buffer storage tank according to one of the previous claims, **characterised in that** the damper has a U-shaped profile in cross-section, in which the two opposing parallel legs (6, 7) delimit the distributor zone (3) in preferably a vertical direction, whilst the section connecting the two legs represents a separating element (5, 10) through which the openings (4) pass.

7. A buffer storage tank according to one of the previous claims, **characterised in that** the distributor zone (3) is delimited by two upper or lower, as the case may be, sickle-shaped cover plates (6, 7) that are spaced apart parallel to each other, whilst a separating element (5, 10), through which the openings pass, connects the two cover plates together along their inner sickle contour.

8. A buffer storage tank according to one of the previous claims, **characterised in that** the distributor zone (3) has only one media supply opening.

9. A buffer storage tank according to the preceding claim, **characterised in that** a baffle plate (8), associated with an opening (4), in order to influence the outflow velocity at a predetermined setting angle is aligned with an opening axis perpendicularly projecting through the associated opening (4).

10. A buffer storage tank according to one of the two preceding claims, **characterised in that** at least one opening (4) is rectangular, and at least one baffle plate (8) associated with this opening (4) adjoins a side of the rectangular edge of the opening (4).

11. A buffer storage tank according to the preceding claim, **characterised in that** the opening (4) is formed by cutting out the baffle plate (8) along three of its longitudinal edges and swivelling about the fourth edge remaining common to the opening (4) and the baffle plate (8).

## Revendications

1. Réservoir tampon comprenant un amortisseur d'écoulement d'entrée (1) pour guider un flux massique devant s'écouler vers l'intérieur du réservoir tampon (2), réservoir tampon
a) dans lequel l'amortisseur d'écoulement d'entrée comporte une zone de répartition (3) dans laquelle peut pénétrer l'écoulement d'un fluide,
b) dans lequel l'amortisseur d'entrée d'écoulement est muni de plusieurs ouvertures (4) séparées, pour permettre l'écoulement de fluide à partir de la zone de répartition (3) vers l'intérieur du réservoir (2),
c) dans lequel la zone de répartition (3) est délimitée au moins partiellement par un tronçon (10) de la paroi de réservoir,
**caractérisé**
d) en ce que la position et/ou la grandeur et/ou la configuration des ouvertures (4) est choisie de façon telle, que le flux massique de charge amené à la zone de répartition (3) se répartisse sur toutes les ouvertures (4) et s'écoule à travers chaque ouverture (4) avec une vitesse d'écoulement sensiblement identique, dans le réservoir tampon (2), et
e) en ce que dans la zone de répartition (3) sont prévues des tôles déflectrices (8) pour dévier de manière ciblée l'écoulement vers des ouvertures (4) individuelles.

2. Réservoir tampon selon la revendication 1, **caractérisé en ce que** toutes les ouvertures (4) se situent à la même hauteur verticale.

3. Réservoir tampon selon la revendication précédente, **caractérisé en ce que** la zone de répartition (3) est agencée à l'intérieur du réservoir, et est séparée de l'intérieur du réservoir par un élément de séparation (5) traversé par les ouvertures (4).

4. Réservoir tampon selon l'une des revendications 1 à 2, **caractérisé en ce que** la zone de répartition (3) est séparée de l'intérieur du réservoir par une paroi extérieure de réservoir (10) en tant qu'élément de séparation (5), traversée par les ouvertures (4).

5. Réservoir tampon selon l'une des revendications précédentes, **caractérisé en ce qu'**au moins une surface de délimitation (6, 7) de la zone de répartition, est adaptée au contour du réservoir (2).

6. Réservoir tampon selon l'une des revendications précédentes, **caractérisé en ce que** l'amortisseur présente, dans une section transversale, un profil en forme de U dont les deux ailes (6, 7) parallèles et opposées, délimitent la zone de répartition (3) dans la direction verticale, tandis que le tronçon reliant les deux ailes constitue un élément de séparation (5, 10) traversé par les ouvertures (4).

7. Réservoir tampon selon l'une des revendications précédentes, **caractérisé en ce que** la zone de répartition (3) est délimitée par deux plaques de recouvrement (6, 7) supérieure et respectivement inférieure, en forme de faucille et espacées parallèlement l'une de l'autre, tandis qu'un élément de séparation (5, 10) traversé par les ouvertures, relie les deux plaques de recouvrement le long de leur contour de faucille intérieur.

8. Réservoir tampon selon l'une des revendications précédentes, **caractérisé en ce que** la zone de répartition (3) ne présente qu'une seule ouverture d'alimentation en fluide.

9. Réservoir tampon selon la revendication précédente, **caractérisé en ce qu'**une tôle déflectrice (8) associée à une ouverture (4) pour influencer la vitesse de sortie d'écoulement, est orientée sous un angle d'incidence prédéterminé par rapport à un axe d'ouverture traversant de manière normale l'ouverture (4) associée.

10. Réservoir tampon selon l'une des deux revendications précédentes, **caractérisé en ce qu'**au moins une ouverture (4) est rectangulaire, et au moins une tôle déflectrice (8) associée à cette ouverture (4) est adjacente à un côté du bord rectangulaire de l'ouverture (4).

11. Réservoir tampon selon la revendication précédente, **caractérisé en ce que** l'ouverture (4) est réalisée par découpage de la tôle déflectrice (8) le long de trois de ses côtés de bordure et pivotement de la partie découpée autour du quatrième côté restant, commun à l'ouverture (4) et à la tôle déflectrice (8).
